# EUROPEAN PATENT APPLICATION

(11) **EP 1 803 971 A1**
(43) Date of publication of application: **04.07.2007**
(21) Application number: 05802930.7
(22) Date of filing: 29.09.2005
(51) Int. Cl.: F16H 25/06, F16H 13/08, B60K 17/08

(54) **BALL TRANSMISSION UNIT FOR A SPEED CONVERTER (VARIANTS) AND A STEP-BY-STEP GEAR BOX BASED THEREON**

(30) Priority: 04.10.2004 RU 2004129188
(71) Applicant: Joint Stock Company" Tomsk Transmission Systems", Tomsk, 634009 (RU)
(72) Inventor: STANOVSKOY, Viktor Vladimirovich, Tomsk, 634063 (RU); KAZAKIAVICHIUS, Sergei Matveievich, Tomsk, 634063 (RU)
(74) Representative: Mötteli-Mantelli, Novella
(86) International application number: PCT/RU2005/000486
(87) International publication number: WO 2006/038833

(57) **Abstract**

The invention relates to mechanisms for converting a speed of rotation, in particular to transmitting a rotation torque by means of a ball chain and can he used for machine and mechanism drives in the form of a module for constructing step-by-step gear boxes. The transmission unit comprises three in-scries arranged discs provided with periodical roller paths which form two pairs of mating roller paths intermeshing by means of two ball chains. The side discs are coaxial to each other and the middle disc is arranged on the shaft eccentric disposed inside the unit. A female sleeve is mounted coaxially with respect to the side discs and is provided with an eccentric area which is embodied on the internal surface thereof in the area of the middle disc and on which said middle disc is set. In order to produce a gear box, the inventive unit is provided with controlled gear shifting elements which simultaneously connect the eccentric shaft of the unit to the external links and one of the side discs to the body, or simultaneously connect one of the side discs to the links and the sleeve to the body, or any side disc to the sleeve of the shaft.

## Description

### Field of the Invention

This invention relates to area of general mechanical engineering, namely, to mechanisms for transmitting and varying rotational torque by means of a ball chain. The invention can be used for machine and drive mechanisms of the widest purpose. Its application as a module of a vehicle's gear box is especially intended. Motor vehicles, including automobiles, trucks, and motorcycles are principal, but not sole applications.

### Description of the Prior Art

A transmission unit wherein balls are used to affect the power transfer is disclosed in U.S. Pat. No.5016487; this unit includes an arrangement of a series of three coaxial disks. The drive and driven parts are side disks. The drive disk displays a closed guide groove extending eccentrically relative to the rotating axis. The driven disk displays a closed guide groove on a surface facing the drive disk and centered on the rotating axis. The middle disk has elongated hole guides containing transmitting balls. The intermediate disk is a flange arranged between the drive and the driven disks.

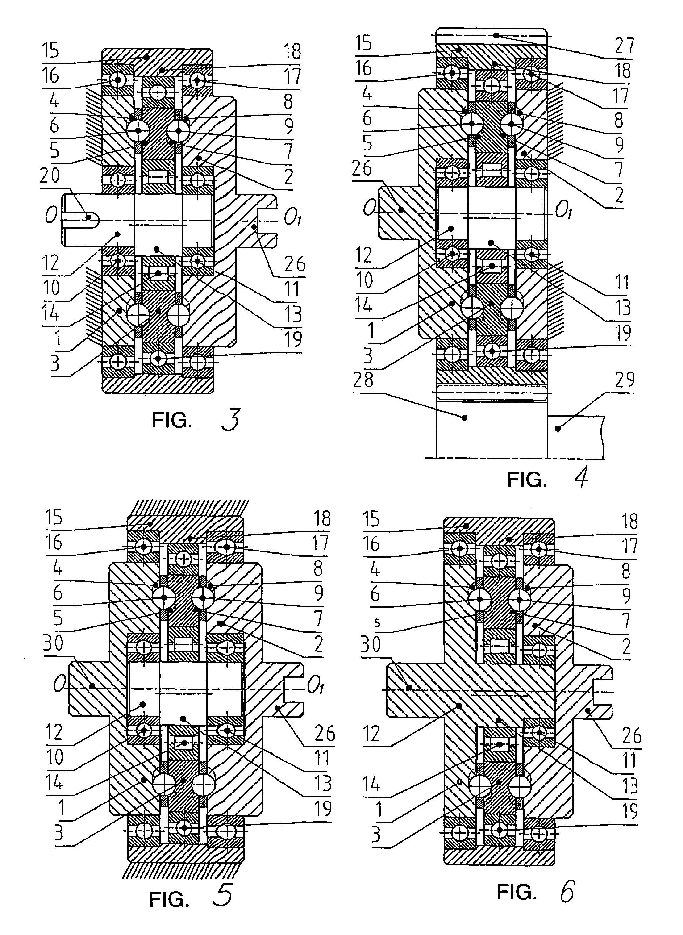

In the same patent, a description of a multispeed gear box based on the transmission unit, is presented in Fig.6. It contains a housing in which several transmission units are arranged in-series. The drive member of the gear box is an input member of the first transmission unit. The driven member includes a number of driven disks, corresponding to the number of gear speeds fixedly joined together in rotation by the balls. A hollow shaft extends through the internal bores of the driven disks and flanges. A controlled switching element or cam slide runs through the hollow shaft. Axial displacement of the cam slide effects the joining of one of the driven disks rotationaly with the hollow shaft. I.e., the ratio of any gear stage is the product of ratios of transmitting units connected into the gear train.

This transmitting unit and the multistage transmission based on it both suffer from the following disadvantages: a low efficiency coefficient and insufficient torque transmitting capacity due to friction of the balls in the slots of the intermediate disk; a low total number of gear ratios equal to the number of transmitting units in the train. Increasing number of transmission units connected in-series is impractical due to drastically decreasing transmission efficiency.

There is known a torque transmitting unit of the epicyclical type, for example, the speed reducing gearing mechanism disclosed in US 4,643,047, which transmission unit avoids the above disadvantages. This unit includes a disk (stator) fixed to a housing, output disk, and an intermediate disk arranged between said stator and output disks. The intermediate disk is rotatably mounted upon the eccentric of an input shaft. A pair-conjugated (conjugated pair) of epi- and hypo-trochoidally cut grooves are disposed facing the surface of each other's disks; a plurality of rolling elements is disposed between the grooves and transmit torque from an input member to an output member. As the input member orbits about its axis, the driven element rotates at a reduced speed dependent upon the numbers of "lobes" of the opposed grooves, while the rolling torque transmitting elements circulate following a substantially trochoidal path and maintaining constant contact with both grooves. Absence of a disk with through slots in each of ball gearings allows increasing the efficiency and load capacity.

Constructed by a similar principle is the differential speed converter shown in Fig 8 in disclosing of patent US 4,829,851. Authors have named this transmitting unit "toothless" as it is constructed without tooth wheels. The transmitting unit contains three disks arranged in series. Two end disks are provided with closed periodic grooves disposed on faced each other surfaces of said disks. Intermediate disk has closed periodic grooves on both its surfaces, which grooves together with the grooves of end disks form two pairs of conjugated grooves engaging by means of two files of balls. Each ball in a file contacts to both conjugated grooves. The number of periods differs by 2 in the conjugated grooves. The intermediate disk is rotatably mounted on eccentric of input shaft. The input shaft is mounted through an aperture in the first of the end disks. The other of the end disks is rigidly secured to an output shaft. The output shaft rotates with the speed depending on speeds of rotation of input shaft and of the first of the end disks. If the first of the end disks is immovable, i.e. is affixed with the casing, a gear ratio is obtained as ± **2/*Z*₂** ± **2/*Z*₃,** where ***Z*₂** and ***Z*₃** are the numbers of the periods of grooves in the intermediate disk. Signs + and - depend on a ratio of the period numbers in conjugated grooves. The last ball-type transmission unit is accepted for the prototype.

Thus, the ball-type transmission unit having a particular set of grooves with the certain numbers of the periods will yield a particular value of gear ratio. For obtaining of other gear ratio it is necessary to have grooves with other parameters. The transmission unit is simple enough in a design, and the most labor-consuming in manufacturing components are the grooves.

Therefore, the first object of the invention is an expansion of functionalities of a ball-type transmission unit with one particular set of grooves so that by having a single unit, one may design mechanisms with different gear ratios. The technical result of the invention is in obtaining more than one gear ratio by means of particular set of grooves, thereby allowing designing of several various gearings by means of the same transmission unit-module, i.e. the transmission unit can be used as module for constructing step-by-step gear box. In turn, the above-mentioned result allows realization of gear box with increased number of ratios by means of minimal number of the transmission units.

### SUMMARY OF THE INVENTION

In accordance with the present invention, there is provided a ball-type transmission unit including an arrangement of a series of three disk members provided with a periodical groove, which form two pairs of mating grooves, as well as the prototype. Each of the disks defines an inner passage, the passage coaxial to a central axis of the transmission unit for rotatably mounting of an internal shaft. Each pair of mating grooves intermeshes by means of ball chain (chain of balls). Said ball are in continuous contact to both conjugated grooves in pair. Two end disks are coaxial to each other, and intermediate disk is rotationally mounted upon the eccentric portion of the internal shaft, passing thorough the inner passage formed in the disks. Unlike the prototype, a female sleeve is rotationally mounted coaxially with respect to the end disks. An internal surface of the female sleeve is provided with an eccentric portion in the area of the intermediate disk, and the intermediate disk is rotationally mounted within the female sleeve upon the eccentric portion. Eccentricity of the female sleeve is identical to the eccentricity of the shaft. Thus, the intermediate disk is mounted with the availability of independent rotation between the internal shaft and the female sleeve, eccentrically to the end disks. The end disks, female sleeve and internal shaft are provided with elements to couple to respective elements of an external mechanism.

One more variant of achieving the same object associated by the same spirit with the first variant is possible. In the second variant of the invention, a ball-type transmission unit includes an arrangement of a series of three disk members provided with periodical grooves which form two pairs of mating grooves, as well as the prototype. Each pair of mating grooves intermeshes by means of a ball chain. The two end disks are coaxial to each other. Unlike the prototype, a female sleeve is mounted coaxially to the end disks. The internal surface of the female sleeve is provided with an eccentric portion in the area of the intermediate disk, and the intermediate disk is rotationally mounted within the female sleeve upon its eccentric portion. Thus, the intermediate disk is mounted within the female sleeve and is set eccentrically relative to the end disks. The end disks and the female sleeve are provided with elements to couple to respective elements of an external mechanism. This variant differs from the first variant only in that it has no an internal shaft. The shaft function is done by the female sleeve.

Presented variants of the transmission unit allow developing of a compact gear-box of high efficiency by using the technique of enumerative ratios of modules as it is described in specification of patent US 4599848. For this purpose, at least one ball-type transmission unit under the first variant of the invention is mounted in a housing having provided with external rotational links, and is provided with controlled gear shifting elements disposed at input or/and output of the transmission unit, and with an external rotational links. The gear shifting elements simultaneously connect the internal shaft to the to external rotational links with simultaneous coupling of the female sleeve to the housing, or any one of the end disks to the external rotational links with simultaneous coupling the female sleeve to the housing, or any one of the end disks either the female sleeve or to the internal shaft. Therein, the "external rotational links" are both the driving and driven shafts of the gear-box (in the case of single unit), or input shaft of the next unit, or output shaft of the previous unit (in the case of gear-box composed of the several transmission units-modules).

Thus, even a single transmission unit provided with suitable controlled gear shifting elements is in itself a gear-box with at least three speeds.

### BRIFE DESCRIPTION OF DRAWINGS

The invention is illustrated by drawings, in which like reference characters designate the same or similar parts throughout the several views, and wherein:
Fig.1 is a schematic, sectional view of the first embodiment of the invention wherein the ball-type transmission unit is formed as a module;
Fig.2 illustrates cross-section by A-A of Fig1.;
Figs.3-9 show schematic views of six variations gears based on the first embodiment of the invention;
Fig.10 shows schematic, sectional view of the second embodiment of the invention;
Figs.11-16 show various schemes of coupling the second variant of ball-type transmission unit to the effect that different gear ratios are achieved;
Figs. 17-18 show variants of designing three-speed gear-box by means of different positions of controlled shifting elements.

### DETAILED DESCRIPTION OF THE PREFERRED EMBODIEMENTS

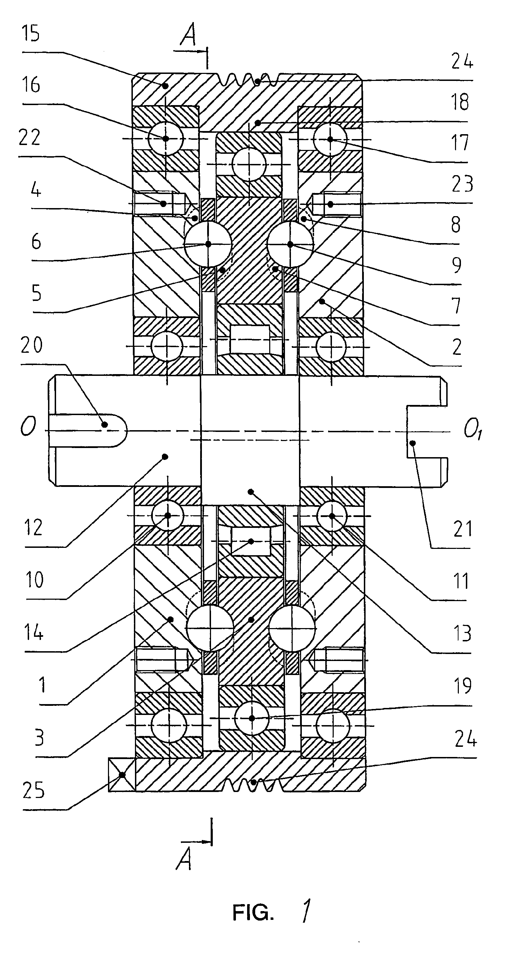

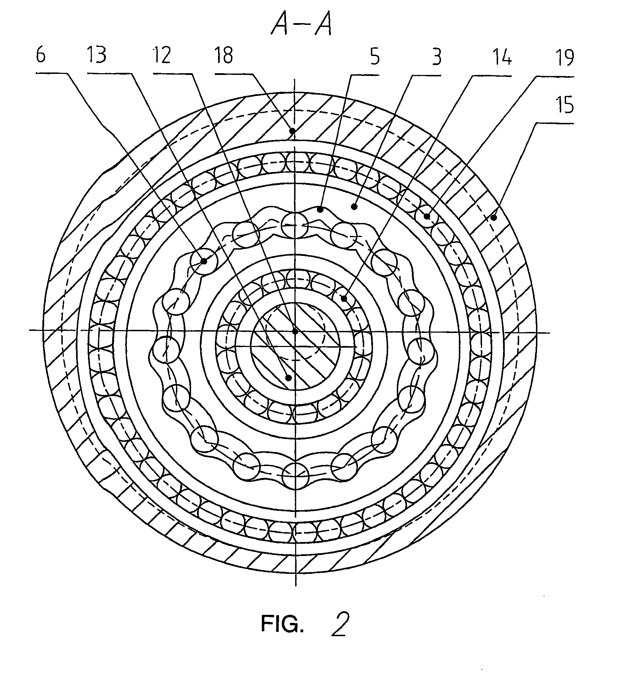

Represented in Figs. 1, 2, and 10, ball-type transmission units-modules can be produced as independent products and then they can be built into various mechanisms, by the analogy with bearings, resulting in the achieving of different gear ratios. The ball-type transmission unit in Figs. 1 and 2 includes three disks **1, 2** and **3** arranged in-series. The end disks **1** and **2** are essentially annular disks. Disk **3** is the intermediate disk and it is rotationally mounted upon the eccentric portion **13** of an internal shaft **12** passing thorough inner passage formed in the disks. The disk **1** is provided with a periodic groove **4** on its flat surface facing to the disk **3.** Similar groove **5** but having other period's number is cut on a surface of the disk **3.** The grooves **4** and **5** form a pair of mating grooves which are intermeshing by means of a chain of balls **6.** Balls **6** contact both grooves **4** and **5.** On the opposite surface of disk **3** there is cut a periodic groove **7** mating to groove **8** in disk **2.** The grooves **7** and **8** form a pair of mating grooves which are intermeshing by means of a ball chain **9.** The grooves **4, 5, 7** and **8** count the numbers of periods as ***Z**₄**, Z**₅**, Z**₇**, Z**₈* respectively. The numbers of periods in the pairs of mating grooves can coincide with each other and with number of balls, or they can differ from each other by 1 or by 2. In the first case, the grooves represent the system of the closed annular flutes which are spaced along a circle, and the gearing transfers the rotation without change of speed. If the numbers of periods in the mating grooves differ by 1, then one of said grooves is a continuous periodically bent groove, and the other is either the set of semispherical flutes or the set of annular flutes which number is equal to the number of balls.

Also, a third variant of mating grooves combination is possible when the numbers of their periods differ by 2. Then the number of balls is less by 1 than number of periods in one of grooves, and the number of balls is by 1 more than number of periods in the other groove. In this variant both of the grooves are continuous periodically bent grooves.

The end disks **1** and **2** are coaxial to each other and are mounted on the internal shaft **12** by means of bearings **10** and **11** respectively. The internal shaft **12** has an eccentric portion **13** in its middle area upon which the intermediate disk **3** is mounted by means of a bearing **14.** Thus, the intermediate disk **3** is eccentrically displaced relative to disks **1** and **2.** The female sleeve **15** is set by means of bearings **16** and **17** externally to the unit and coaxially to the side disks **1** and **2.** Bearings **16** and **17** provide for rotation of the female sleeve **15** about the axis **OO₁** of the transmission unit. Eccentric portion **18** is formed in the internal surface of the female sleeve **15** in which the intermediate disk **3** is mounted by means of bearing **19.** The eccentric portions **13** and **18** are identical in their values and directions.

To be able be arranged in the structure of any drive mechanism, the unit should be provided with elements for its fastening to an external drive mechanism. In Fig. 1, such elements for fastening of the internal shaft **12** are a key **20** on one end and a flat **21** on the other end of the internal shaft **12.** Apertures **22** and **23** are provided for fixing screws to couple disks **1** and **2** with an external drive mechanism. Coupling of the female sleeve **15** to external moving links preferably is made in the form of a V-belt transmission. For this purpose the sleeve **15** is provided with V-grooves **24** upon its outside surface. It is evident that above elements of fastening are not unique. Fastening of parts can be made by any known way in the art. For example, it can be made in the form of a spline key face **25** shown in the bottom part of Fig. 1. The internal shaft **12** can be made hollow, with fastening elements provided on its internal surface.

Now, refer to Figs. 3-9, showing availability of achieving various ratio states with the same modular unit, of which ratio states are depending on different coupling elements of the transmission unit. In gearing of Fig. 3 the internal shaft **12** acts as an input member by means of its eccentric **13.** The disk **1** acts as a reaction member secured to the casing. In Fig. 3, it is conventionalize. Disk **2** is connected to the driven shaft **26.** In this instance, the female sleeve **15** is connected to the internal shaft **12** by means of both eccentrics **13** and **18** and by means of bearings **14** and **19,** and the female sleeve **15** is rotated together with the shaft **12.** The intermediate disk **3** has availability of both planetary movements relative to axis **OO**₁ and rotation about its own movable axis. The gearing obtaining by this coupling of elements is similar to the prototype, and the resulting gear ratio is defined as ***i**₁* = 1 / (1-***Z**₅**Z**₈*/***Z**₄**Z**₇).*

In the scheme shown in Fig. 4, the female sleeve **15** acts as an input member, therefore gear teeth **27** are provided on outside surface of the sleeve, which teeth **27** are engaged with a gear wheel **28** secured to a driving shaft **29.** The disk **1** is an output member and is secured to the driven shaft **26.** The disk **2** is a reactive immovable member secured to the casing of the unit. Such coupling of elements of the modular unit yields a gearing with parallel driving **29** and driven **26** shafts. The resulting gear ratio is defined as ***i**₂* = 1 / (1-***Z**₇**Z**₄*/***Z**₈**Z**₅*).

It is necessary to note, that a gear ratio between driving shaft **29** and driven shaft **26** differs from ***i**₂* due to the additional tooth gearing **28-27.**

In gearing of Fig. 5, the disk **1** is connected to a driving shaft **30** and is an input member. The reaction member is the female sleeve **15** secured to the casing. The disk **2** is an output member connected to driven shaft **26.** The disk **3** is mounted eccentrically to the both disks **1** and **2** by the immovable sleeve **15.** Due to such mounting, the disk **3** can only rotate about an axis displaced from axis **OO₁** by distance equal to the eccentricity. The resulting gear ratio is: ***i**₃ **=Z**₅**Z**₈*/***Z**₄**Z**₇**.***

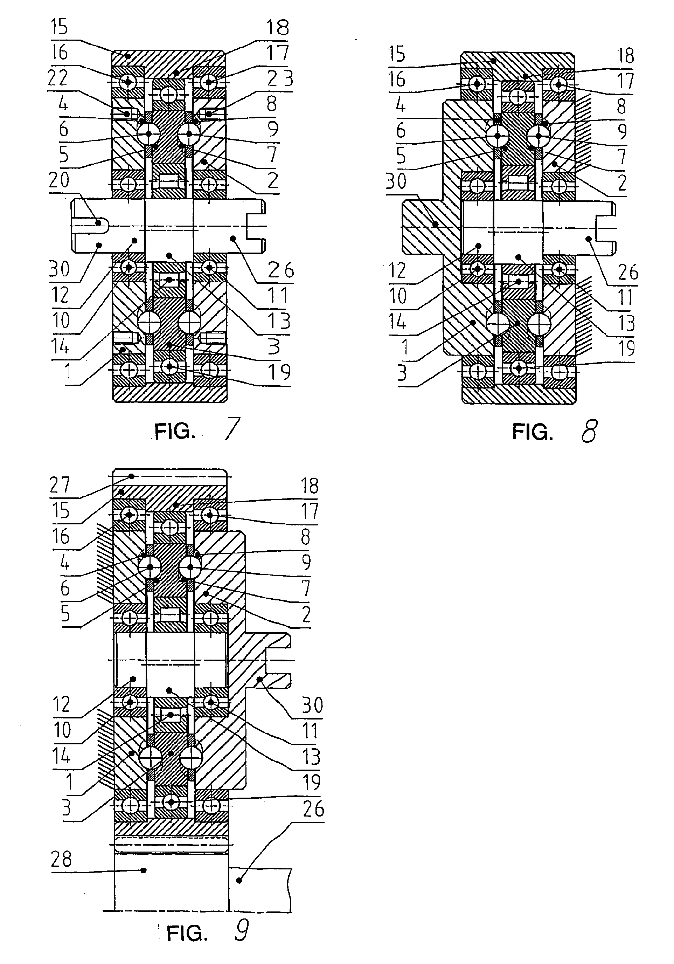

The schemes shown in Figs. 6 and 7 yield the gear ratio of: ***i*₄** = 1. In Fig.6, a driving shaft **30** is simultaneously connected to the disk **1** and to the internal shaft **12.** An output member is the disk **2.** In this case, the whole modular unit rotates bodily, and a torque is transferred to driven shaft **26** through a ball chain **9** meshing grooves **7** and **8.**

In Fig.7, torque is transferred from the driving shaft **30** to the driven shaft **26** through an internal shaft **12** connected with both of said shafts. All of the other members rotate together with said shafts as a whole.

In the gearing of Fig. 8, disk **1** is the input member, therefore it is connected to the driving shaft **30.** Disk **2** is the reaction member connected to the casing of the unit. The output member is the internal shaft **12** connected to the driven shaft **26.** The resulting gear ratio is: ***i**₅ =* 1*-**Z**₇**Z**₄*/***Z**₈**.Z**₅**.***

It should be noted that in this scheme the female sleeve may serve as an output member also, since the sleeve **15** and the shaft **12** are interconnected by means of eccentric portions **13** and **18.** It is preferable to use an additional gear or a belt drive to transfer rotation from the sleeve**15** to the driven shaft. As a result, this scheme will be a gearing with parallel shafts, and the resulting gear ratio differs from ***i₅*** by the gear ratio of the additional gear or a belt drive.

And at last, by way of the coupling scheme shown in Fig. 9, the input member is disk **2** connected to the driving shaft **30,** and the reaction member is disk **1.** The output member in this case may be either the female sleeve **15** or the internal shaft **12.** However, a power takeoff from the female sleeve **15** is easier in design. In Fig. 9, for this purpose, the external surface of the sleeve **15** is provided with teeth **27** engaging a wheel **28** mounted on a driven shaft **26.** The resulting gear ratio of this gearing is: ***i₆** =* 1-***Z**₅**.Z**₈*/***Z**₄**.Z**₇**;*** and the gear ratio between the driven shaft **26** and the driving shaft **30,** is determined as: ***i**₆**· Z**₂₈*/***Z**₂₇**.***

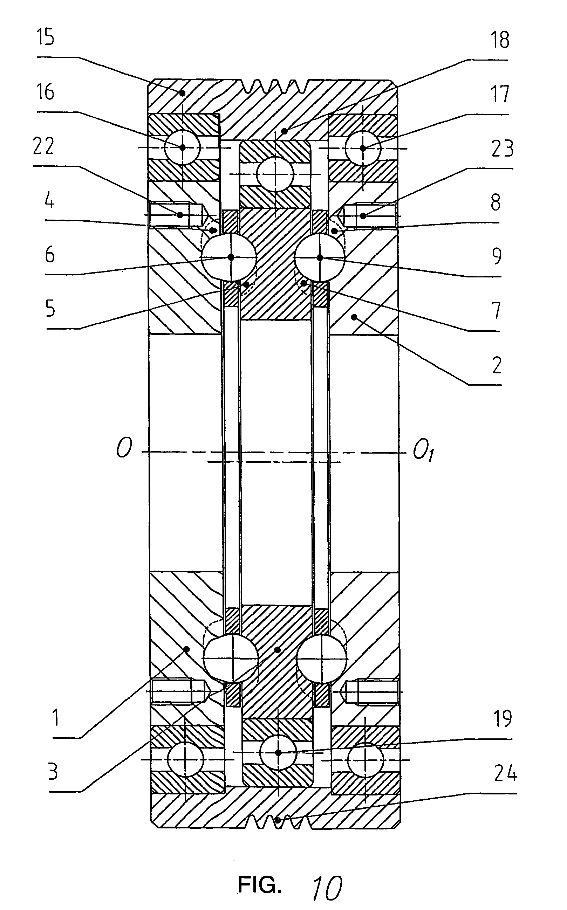

As explained above, in the offered modular unit, the shaft **12** and the female sleeve **15** are associated in motion by means of the intermediate disk **3** and by means of identical eccentric portions **18** and **13.** This means that movement and functions of these connected members 12 and **15** are absolutely identical. This fact allows creating modular unit without the internal eccentric shaft. The second embodiment of the modular unit designed without internal shaft **12** is represented in Fig. 10. Therein, end disks **1** and **2** are coaxial to each other and are mounted on the internal surface of the female sleeve **15** by means of bearings **16** and **17;** said disks **1** and **2** have a common axis of rotation **OO₁.** The internal surface of the sleeve **15** is provided with eccentric portion **18** in the middle area. Thus, the intermediate disk **3** is mounted upon the eccentric portion **18** by means of bearings **19.** The rotation axis of the disk **3** is offset by the amount of eccentricity **18** relative to axis **OO₁**. Through passage can be formed inside of all said disks if the modular unit is used, for example, in drives of valve actuators where it is necessary to have free space for a pass actuator rod. Periodical bent grooves **4, 5, 7, 8** are cut in flat facing each others surfaces of disks **1, 2** and **3.** The facing (each other) grooves **4** and **5** form a mating pair of grooves intermeshing by a chain of balls **6.** The facing (each other) grooves **7** and **8** form mating groove pair intermeshing by chain of balls **9.** The fixing apertures **22** and **23** serve to connect the disks **1** and **2** to either the driving or the driven shaft or to the immovable unit casing. The same purposes may served by internal openings in disks **1** and **2,** by means of which openings the disks **1** and **2** may be rigidly mounted on coaxial shafts. The female sleeve **15** may be coupled to a moving link by means of an additional gear with misalignment shafts (tooth gear, traction gear or gear with flexible connection). In Fig. 10, the external surface of the sleeve **15** is provided with V-grooves **24** for engagement with a V-belt to use as flexible connection.

By way of illustrations now let us consider variations of coupling schemes in more detail. In Fig. 11, the female sleeve **15** acts as an input member, therefore the female sleeve **15** is connected to driving shaft **29** by a flexible link. In Fig. 11, the V- belt **31** is used as flexible link which transfers rotation of the shaft **29** to sleeve **15.** The disk **2** is connected to driven shaft **26** and is used as an output member. The disk 1 is the reaction member connected to the immovable casing. The shaft **26,** in this embodiment is a through-one, and its end **32** is mounted by means of bearing **10** in a through passage in the reaction disk **1,** thereby eliminating a console set of the shaft **26.** This gearing does not differ in principle of operation of the transmitting mechanism of Fig. 3; therefore the gear ratio is equal to: ***i**₁.* The gearing of Fig. 3 can be used either for transfer of rotation between coaxial shafts or for transfer of rotation between parallel shafts, but the gearing of Fig. 11 is most effectively to use for transfer of rotation between parallel shafts with using a flexible link in the form of multiple V-belt drive or, for example, a gear train for connection the female sleeve **15** to a driving shaft **29.** This additional link allows correction of the gear ratio ***i**₁* up to desired values. If there is a need for use in gear with coaxial shafts, then input female sleeve **15** may be connected to moving external link by means of an additional hollow shaft which is coaxial to driving shaft **26** (it is not shown in Fig. 1).

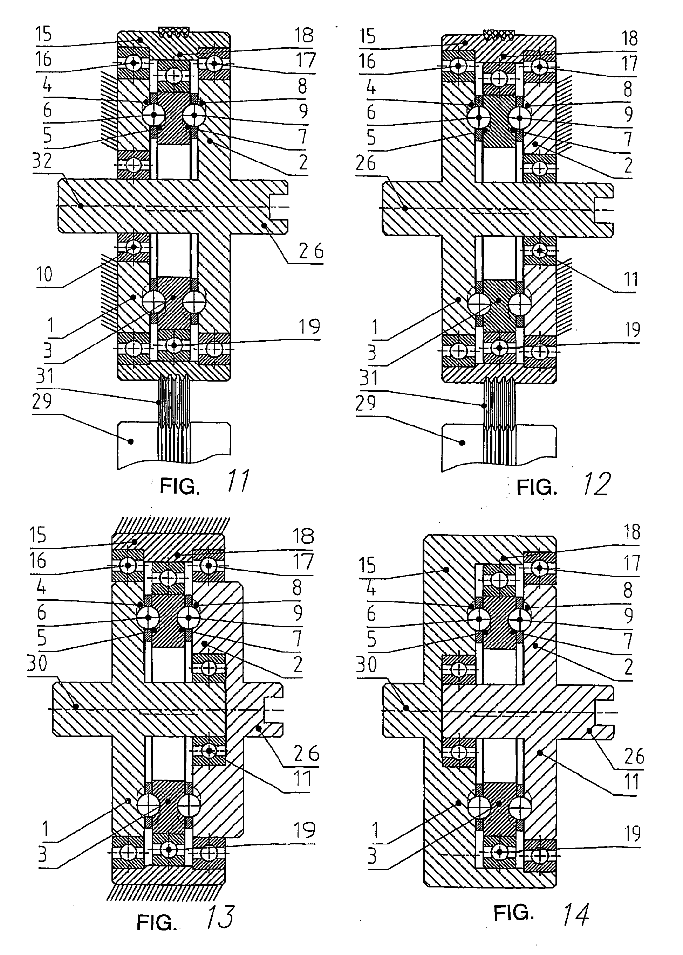

Fig. 12 illustrates a coupling scheme similar to the scheme of Fig. 4, but applied to the second variant of transmitting modular unit. Here, the input member also is the female sleeve **15** connected by a V-belt **31** to a driving shaft **29.** The reaction disk and the output disk interchange their positions in comparison to Fig. 11. The disk **1** is an output member connected to the driven shaft **26,** and the disk **2** is connected to the immovable casing. Accordingly, the gear ratio is equal to: ***i**₂,* since it is determined in the same way as for the gearing of Fig.4.

The coupling scheme presented in Fig. 13 is similar to the scheme shown in Fig. 5. The female sleeve **15** is connected to the immovable casing. The disk **1** is the input member connected to the driving shaft **30,** and the disk **2** is connected to the driven shaft **26.** Additionally, to align the disks **1** and **2** relative to each other, the shaft **30** is extended through the other side of the disk **1,** and the opposite end of the shaft 30 is mounted by means of the bearing **11** in an aperture of the disk **2.** The gear ratio is equal to: ***i**₃***.**

In Fig. 14, the disk **1** and the female sleeve **15** both are connected to the driving shaft **30.** This coupling scheme is similar to the scheme of Fig. 6 and has the gear ratio equal to 1. Since the second embodiment of the unit-module has a through passage, there is always a possibility to pass a shaft through the passage for transmitting rotation without speed variation.

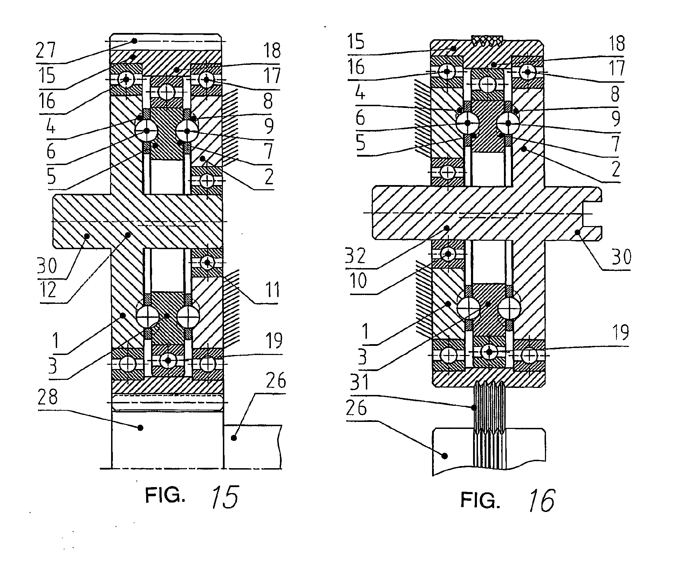

In the coupling scheme of Fig.15, the driving shaft **30** is connected to the disk **1,** the disk **2** is connected to the immovable casing; and the output rotation is taken-off from the female sleeve **15.** Therefore, its external surface is provided with gear teeth **27** engaging a gear wheel **28** mounted on a driven shaft **26.** The gear ratio is equal to: ***i**₄**,*** and it is corrected by a gear ratio of the gear pair **27-28.**

Lastly, the coupling scheme shown in Fig.16 is the mirror imaging of the scheme in Fig.15, in that disks **1** and **2** have exchanged functions. The disk **1** is connected to the immovable casing, and the disk **2** is connected to the driving shaft **30.** Output torque is taken off from the female sleeve **15** by means of a multiple V-belt drive. The gear ratio ***i*** is corrected by a gear ratio of V-belt drive coupled between the sleeve **15** and the driven shaft **26.** The shaft **30** is provided with a portion **32** by means of which the shaft is mounted in an aperture of the disk **1** through bearing **10.**

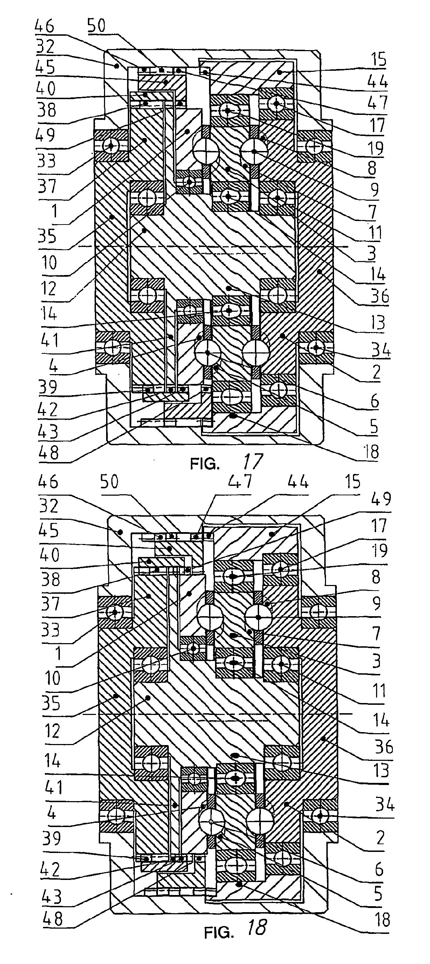

Figs. 17 and 18 illustrate one embodiment of the three-speed gear-box based on the first embodiment of the ball-type transmission unit according to the invention. Figures 17 and 18 differ from each other only by position of the shifting control elements. The driving shaft **35** and the driven shaft **36** of the gear-box are mounted in the housing **32** by means of bearings **33** and **34,** respectively. The shaft **36** is fixed to the disk **2** which is the output member in this instance. The driving shaft **35** is connected to a disk **37.** The disk **37** is provided with spline keys **38** which are formed on the side surface thereof for constant connection with mating spline keys **39** of the sliding shifting clutch **40** (controlled shifting element). Rigidly mounted on the internal shaft **12** is a disk **41** having spline keys **42** formed on the side surface thereof for connection to the mating spline keys **43** provided on the sliding shifting clutch **40.** A disk **1** also has spline keys on the external side surface thereof for connection to spline keys **43** of the controlled sliding shifting clutch **40.** The clutch **40** is a three-position controlled shifting element; and on the top and bottom parts of Fig. 17 there are shown two extreme positions of shifting; and in Fig. 18 there is shown the intermediate position of the sliding shifting clutch **40.** In one of the extreme positions, the clutch **40** connects the driving shaft **35** to the disk1; and in another of the extreme positions, the clutch **40** connects the same driving shaft **35** through the disk **41** to the internal shaft **12.** By means of the intermediate position shown in Fig. 18, the sliding shifting clutch **40** simultaneously connects the driving shaft **35** to both the disk **1** and to the internal shaft **12** thereby locking the unit. The female sleeve **15** is mounted on the disk **2** by means of bearing **17.** The intermediate disk **3** is mounted on the eccentric portion **18** through the bearing **19.** The female sleeve **15** is provided with spline keys **44.** The gear-box is provided with one more controlled gear shifting element in the form of sliding clutch **45** which has spline keys **46,** 47 and **48** disposed on both internal and external surfaces of the clutch **45.** The disk **1** and the housing **32** are provided with mating spline keys **49 & 50** respectively. By means of the engagement of corresponding spline keys, the sliding shifting clutch **45** selectively connects either the disk **1** or the female sleeve **15** to the housing **32.** Via the third position of the sliding shifting clutch **45** shown in Figs. 18 both the disk 1 and the female sleeve **15** are released from connection with the housing **32.** Basically, achieving of other speeds is possible, but for this purpose the input and the output members in the module must be interchanged in the positions, but this is too difficult to accomplish in this structural arrangement.

In the examples shown in Figs. 17 and 18, the gear-box is composed of one module, with a controlled gear shifting element located at the input of the module, and selectively connects the module to the driving shaft of the gear box by different ways. The gear shifting element in this case implements the operating modes of schemes shown in Figs.3, 5 and 6.

The gear shifting element may be located at the output of the module, thereby connecting any member of the module to the driven shaft of the gear box. In this case, a shifting element will implement the operation modes of schemes shown in Figs. 5, 7, and 8 with according ratios updating. If shifting structures are located both at the input and at the output of the module, the number of speeds is greater than three. In above examples the controlled gear shifting elements are configured as splined sliding clutches, but shifting elements may be made in other specific forms which are widely used and well known in the art. For example, shifting elements which connects members of module to the housing may be made as brakes, and shifting elements which connects moving members may be made as lock-up clutches.

A gear-box may be composed of several unit-modules connected in series, at least, one of which is made as described above. In this case, the gear ratios of the set is the result of an enumerative technique, with different ratios for each module under different positions of the shifting elements. Essentially, it is possible to make a gear-box on the basis of the second variant of the transmission unit. However, in this case, the controlled shifting elements in one of positions should simultaneously connect two members of the unit to an external moving link that increases the number of shifting members yielding the same number of speeds with complicated control. Therefore, the first variant of the transmission unit is more preferable for building of a gear-box.

Operation of the ball-type transmission unit according to the invention we will consider referring to one example of above three-speed gear-box, since it allows showing operation of the modular unit under various coupling schemes. The sliding shifting clutch **40** by means of its spline keys **39** constantly engage spline keys **38** of a disk **37** rigidly connected to the driving shaft **35.** In the left position of the sliding shifting clutch **40** (as it is represented in the top part of Fig. 17) spline keys **43** engage spline keys **42** of the disk **41,** thereby coupling the driving shaft **35** to the internal shaft **12.** When the driving shaft **35** rotates, the shaft **12** with the eccentric portion **13** rotates and transmits its rotation to the disk **3.** The disk **3** thus subjected to the rotation is involved in planetary movement since it also makes rotation relative own movable axis. For operation of the transmission unit under this scheme, the disk **1** should be locked, i.e., the shifting clutch **45** should be in the extreme left position connecting disk **1** with the housing **32.** Planetary movement of the disk **3** due to interaction of balls **6** with both the periodic groove **5** in the disk **3** and the periodic groove **4** in the immovable disk **1** is transformed into rotation of the disk **3** about its own axis. In so doing, each revolution of the driving shaft **35** produces revolution of the disk **3** around its own axis by an angle equal to ratio of: ***Z**₄*/***Z**₅**,*** where ***Z**₄* and ***Z**₅* are the amount of periods in the grooves **4** and **5,** respectively. In turn, revolution of the disk **3** due to interaction of grooves **7** and **8** by means of a file of balls **9** is transformed to revolution of the disk **2.** The total gear ratio of transmission ***u**₁* with said position of the shifting elements determined as relation of rotation speeds of driven shaft **36** and driving shaft **35** is: ***u**₁**=i**₃**.*** The coupling scheme with these positions of shifting elements corresponds to Fig. 3.

To obtain another gear ratio, the shifting clutch **40** should be shifted in extreme right position as it is shown in the bottom part of Fig. 17. In this position the driving shaft **35** is connected to the disk **1,** thereby making the disk **1** the input member of the module. The female sleeve **15** with the eccentric portion **18** should be immovable. For this purpose the shifting clutch **45** is shifted in extreme right position connecting the female sleeve **15** to the housing **32** and simultaneously releasing disk **1.** In this instance, the disk **3** becomes rotationally mounted in the housing and available for making only rotational movement about its own axis eccentrically displaced relative to the axis of disks **1** and **2.** Rotation of the disk **1** through a file of balls **6** and both grooves **4** and **5** is transferred to the disk **3** with the ratio determined as well as for usual tooth gear, is: ***Z**₅*/***Z**₄**.*** In turn, rotation of the disk **3** is transferred to the disk **2** through a file of balls **9** and both grooves paths 7 and 8 with ratio equal to: ***Z**₈*/***Z**₇**.*** The total gear ratio of a transmission is: ***u**₂* = ***Z**₅*/***Z**₄ **· Z**₈*/***Z**₇**.*** This coupling scheme corresponds to the same shown in Fig. 5.

In the intermediate position of the shifting clutch **40** shown in Fig. 18, the driving shaft is simultaneously connected with both disk **1** and internal shaft **12.** The shifting clutch **45** is also in intermediate position, releasing both disk **1** and female sleeve **15** from connection with the housing **32.** Since rotation of the driving shaft is transferred simultaneously to both the disk **1** and the internal shaft **12,** disks **1** and **3** rotate together as a whole, i.e., there is locking of the transmission unit. Thus, rotation of the driving shaft **35** is transferred to the driven shaft **36** without change of speed. The coupling scheme corresponds to the scheme shown in Fig.6. It is necessary to note that if said gear-box should be provided with one more shifting element allowing connecting of the driven shaft **36** to the internal shaft **12,** the gear-box should have an additional geared-up speed.

Thus, above we have considered operation of the module with coupling schemes accordingly to Figs. 3, 5 and 6. The module's operation with coupling scheme according to Fig. 4 differs from the scheme of Fig.5 only in that the disk 2 is locked, and the disk 1 is an output member, and there is respective change of total gear ratio.

The module's operation in speed increasing mode is set forth below, in connection with drawings of Figs 8 and 9. The module in the schemes of Figs. 8 and 9 operates as a multiplier. Therefore, let us consider its operation in more detail. Rotation of the driving shaft **30** in Fig. 8 causes rotation of the disk **1.** Due to the engagement between grooves **4** and **5** by means of balls **6,** the disk **3** will be caused to rotate about its own axis, and due to the engagement between groove 7 in the disk **3** and groove **8** in the immovable disk **2** by means of balls **9** the disk **3** will be caused to make planetary movement. The planetary movement of the disk 3 is transformed to rotation of the shaft **12** under the gear ratio: ***i**₅* = 1 - ***Z**₇**.Z**₄***/*****Z**₈**.Z**₅**.*** Referring further to the scheme of Fig. 9, the disk **2** is an input member, and the disk **1** is immovable. Then, the gear ratio is: ***i**₆* =1-***Z**₅**.Z**₈***/*****Z**₄**.Z**₇**.*** Furthermore, here the output torque take-off is from female sleeve **15** instead of the internal shaft **12.** Operation of the second module embodiment is completely similar to above.

As it is discussed above, expressions for definition of gear ratios are accurate for instances when the difference between numbers of the periods of conjugated grooves is equal either 0 or 1 or 2. The value of a gear ratio depends on what groove has the greater number of the periods in the conjugated pair. As an example let us consider grooves with following numbers of the periods: ***Z**₄ =* 27, ***Z**₅* = 25, ***Z**₇* = 20, ***Z**₈* =22.

The module with said grooves under different coupling schemes can yield the following ratio states: ***i**₁ ≈* 55, ***i**₂* ≈ 54, ***i**₃* ≈ 1,018, ***i**₄ =* 1, ***i**₅ ≈ -* 0,0185, ***i**₆* ≈ 0,0181,
where the sign "-" means rotation in the reverse direction. If the number relation in the second pair of conjugated grooves are interchanged, i.e. ***Z**₇* = 22, and ***Z**₈* =20, it yields other values of gear ratios: ***i**₁* ≈ 6,32, ***i**₂* ≈ -5, 32, ***i**₃* ≈ 0,842, ***i**₄* ≈ 1*, **i**₅* ≈ -0,188, ***i***₆ ≈ 0, 158.
If similar interchange is made in the first pair of conjugated grooves, without changing values of the second pair, i.e., ***Z**₄ =* 25, ***Z**₅* = 27, ***Z**₇* = 20, ***Z**₈ =* 22, we obtain following values: ***i**₁* ≈ -5, 32, ***i***₂ ≈ 6, 32, ***i**₃* ≈ 1,188, ***i**₄ =* 1, ***i**₅* ≈ 0,158, ***i**₆* ≈ -0,188.
In comparison with the previous instance, ratio states ***i**₁**, i**₂* and ***i**₅**, i**₆* have the interchanged positions, and ***i**₃* has changed the value. If we interchange positions of the numbers of periods in the second pair, we obtain the set of ratio states similar to first same, but ***i**₃* is equal to 0,982.

Evidently, by varying number of the periods of grooves, one can obtain gear ratios in a wide range. As our calculations have shown the present unit with a variation of numbers of grooves from 5 up to 31 can overlap a standard set of gear ratios from 1, 25 up to 400. Thus, with a set of disks including four pair-conjugated grooves by means of balls, we can create six different mechanisms with differing ratio states. As it has been shown above, a single transmission unit with one direction of coupling can give three reducing ratio states, one of which is reverse and one of which is speed increasing. Therefore, its use as the module for constructing a gear box based on a technique of enumerative ratios is very applicable. So, by connecting of two similar modules, there is the possibility of obtaining up to 16 ratio states some of which are reverse.

## Claims

1. A ball-type transmission unit for a speed converter including three in-series arranged disk members provided with periodical pair-conjugated grooves;
each of said disks define an inner passage, said passage coaxial to a central axis of the transmission unit for rotatably mounting of an internal shaft;
each pair of said conjugated grooves are engaged by means of a file of balls being in continuous contact to both said conjugated grooves;
two of said disk members are end disks arranged in-line each other, and third of said disks is intermediate disk rotationally mounted upon an eccentric portion of said internal shaft passing through the inner passage;
said ball-type transmission unit differing in that the unit further comprises a female sleeve rotationally mounted coaxially to said end disks;
an internal surface of said female sleeve is provided with an eccentric portion in the area of said intermediate disk,
and said intermediate disk is rotationally mounted within said female sleeve upon its eccentric portion;
said end disks, said female sleeve and said internal shaft are provided with elements of their coupling to according elements of external mechanism.

2. Ball-type transmission unit including three in-series arranged disk members provided with periodical pair-conjugated grooves and arranged in series;
each pair of said conjugated grooves are engaged by means of a file of balls being in continuous contact to both said conjugated grooves;
two of said disk members are end disks arranged in-line each other, and third of said disks is intermediate disk;
said ball-type transmission unit differing in that the unit further comprises a female sleeve rotationally mounted coaxially to said end disks;
an internal surface of said female sleeve is provided with an eccentric portion in the area of said intermediate disk,
and said intermediate disk is rotationally mounted within said female sleeve upon its eccentric portion
said end disks, and said female sleeve are provided with elements of their coupling to according elements of external mechanism.

3. Step-by-step gear box based on the technique of enumerative ratios of modules arranged in-series; the gear box comprises a housing for mounting at least one module, an input shaft, an output shaft, and an external rotational links;
wherein said at least one module is embodied in the form of the ball-type transmission unit according to claim 1, and is provided with controlled gear shifting elements,
said controlled gear shifting elements are disposed at an input or/and at an output of the module for varying a ratio by shifting positions of said controlled elements;
wherein said controlled gear shifting elements in one of said shifting positions couple said internal eccentric shaft to the external rotational links with simultaneous coupling one of said end disks to the housing, or in the other of said shifting positions said controlled shifting elements couple any one of said end disks to the external rotational links with simultaneous coupling of the female sleeve to the housing, or in the third of said shifting positions said controlled shifting elements couple two any one of said end disks either to the female sleeve or to the internal eccentric shaft;
therein, the "external rotational links" are both driving and driven shafts of the gear-box in a single module gearbox, or the input shaft of the next module, or output shaft of the previous module in a gear-box is composed of the several modules.
